# EUROPEAN PATENT APPLICATION

(11) **EP 4 715 959 A1**
(43) Date of publication of application: **25.03.2026**
(21) Application number: 25762434.6
(22) Date of filing: 15.01.2025
(51) Int. Cl.: H01M 10/54, B09B 3/40, B09B 3/35, H01M 4/36, H01M 4/525, H01M 4/505, B09B 101/16, H01M 4/02

(54) **METHOD FOR REGENERATING CATHODE ACTIVE MATERIAL AND REGENERATED CATHODE ACTIVE MATERIAL MANUFACTURED THEREFROM**

(30) Priority: 29.02.2024 KR 20240029793; 13.01.2025 KR 20250004744
(71) Applicant: LG Energy Solution, Ltd., Seoul 07335 (KR)
(72) Inventor: CHOI, Jeong Mi, Daejeon 34122 (KR); PARK, Se Ho, Daejeon 34122 (KR); LEE, Jeongbae, Daejeon 34122 (KR); KIM, Yeon Jun, Daejeon 34122 (KR); SEO, Yongsik, Daejeon 34122 (KR); PARK, Gwangseon, Daejeon 34122 (KR)
(74) Representative: Hoffmann Eitle
(86) International application number: PCT/KR2025/099010
(87) International publication number: WO 2025/183519

(57) **Abstract**

The present invention relates to a method of preparing a recycled cathode active material and a cathode active material prepared using the same. More particularly, the method of the present invention includes step (a) of heating a waste cathode in which a cathode active material layer is formed on a current collector to thermally decompose a binder and a conductive material in the active material layer, separate the current collector from the cathode active material layer, and recover a cathode active material in the active material layer; step (b) of adding a lithium precursor to the recovered cathode active material and performing annealing at 400 to 1000 °C for 8 to 12 hours; and step (c) of washing the annealed cathode active material with a washing solution.

## Description

### [Technical Field]

The present invention relates to a method of recycling a cathode active material and a recycled cathode active material prepared using the same. More particularly, according to the present invention, by immediately adding a lithium precursor without a pre-washing process to a cathode active material including single particles recovered after heat treatment of a waste cathode and performing annealing at a predetermined temperature for a predetermined time, residual lithium on the surface of the cathode active material may be reduced, and the crystal structure and crystallite size of the cathode active material may be restored to the level of a fresh cathode active material. Accordingly, when the cathode active material is applied to a lithium secondary battery, the efficiency, lifespan characteristics, and resistance characteristics may be excellent. In addition, the method of the present invention is environmentally friendly because the method does not use acid in the recovery and recycling process. Accordingly, process costs may be reduced as neutralization and wastewater treatment are not required. In addition, a cathode active material is recycled without decomposition of the cathode active material, so there are no discarded metal elements. In addition, since organic solvents are not used, there is no risk of generating toxic gases or explosion. In addition, since a pre-washing process is omitted, and a single-particle cathode active material is directly recycled from a waste cathode, economics and productivity may be greatly improved.

### [Background Art]

### [Cross-Reference to Related Applications]

This application claims priority to Korean Patent Application No. 10-2024-0029793, filed on February 29, 2024, and Korean Patent Application No. 10-2025-0004744, re-filed on January 13, 2025, based on the priority of the above patent, in the Korean Intellectual Property Office, the disclosures of each of which are incorporated herein by reference.

In general, a lithium secondary battery consists of a cathode formed by coating a metal foil, such as aluminum, with a cathode active material layer; an anode formed by coating a metal foil, such as copper, with an anode active material layer; a separator for preventing mixing of the cathode and anode; and an electrolyte solution that allows lithium ions to move between the cathode and anode.

In the cathode active material layer, a lithium-based oxide is mainly used as an active material. In the anode active material layer, a carbon material is mainly used as an active material. In general, as the lithium-based oxide, lithium cobalt oxide (LiCoO₂), lithium nickel oxide (LiNiO₂), lithium manganese oxide (LiMnO₂ or LiMnO₄), lithium iron phosphate compound (LiFePO₄), or the like is used. Thereamong, lithium cobalt oxide has the advantages of high operating voltage and excellent capacity characteristics, but the price of cobalt, which is a raw material, is high and the supply is unstable, making it difficult to commercially apply it to large-capacity batteries. In addition, lithium nickel oxide has poor structural stability, making it difficult to achieve sufficient lifespan characteristics. In addition, lithium manganese oxide has excellent stability but has the problem of poor capacity characteristics. Accordingly, to overcome the problems of lithium transition metal oxides, lithium composite transition metal oxides containing two or more transition metals have been developed. Thereamong, lithium-nickel-cobalt-manganese oxide containing Ni, Co, and Mn is widely used in the field of electric vehicle batteries.

However, lithium nickel-cobalt-manganese oxide is prone to particle breakage during the rolling process during cathode manufacturing, and cracks may occur inside the particles during the charge/discharge process. As a result, the contact area with an electrolyte solution increases, which increases gas generation and active material degradation due to side reactions with the electrolyte solution. Ultimately, the lifespan characteristics deteriorate.

To solve these problems, lithium-nickel-cobalt-manganese oxide consisting of high-strength single particles is being applied to a cathode. However, due to the high strength thereof, it is difficult to recover after use. In addition, even when recovered, battery performance deteriorates due to problems such as decreased crystallinity.

In addition, since a cathode contains rare metals such as cobalt, nickel, and manganese, studies on recovery and recycling of rare metals from the cathodes of lithium secondary batteries that are discarded after use or cathode scraps (hereinafter referred to as "waste cathodes") generated when manufacturing lithium secondary batteries are being actively conducted.

According to the related arts for recovering rare metals such as cobalt, nickel, and manganese from a waste cathode, after dissolving a waste cathode using hydrochloric acid, sulfuric acid, or nitric acid, rare metals such as cobalt, manganese, and nickel are extracted using an organic solvent, and then the extracted metals are used as raw materials for synthesizing a cathode active material.

However, in the case of the method of extracting rare metals using an acid, a neutralization process and a wastewater treatment process are necessary due to environmental pollution problems, which greatly increases process costs. In addition, lithium, which is the main metal of a cathode active material, cannot be recovered by the above method.

To solve these drawbacks, methods (direct recycling methods) of directly recycling a cathode active material from a waste cathode without decomposing the cathode active material are being studied. As such methods, there are mainly four methods such as calcination, solvent dissolution, aluminum (Al) foil dissolution, and crushing & screening.

The calcination method can be performed in a simple process, but has disadvantages such as formation of foreign substances on the surface of a recycled cathode active material, which degrades the rate performance of a battery. In addition, to the above disadvantages, waste gas is generated, and energy consumption is excessive.

In addition, when using the solvent dissolution method, a recycled cathode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are formed on the surface of a recycled cathode active material, and there is a risk of explosion due to hydrogen gas generated in a process of removing aluminum foil.

In addition, the crushing & screening method can be performed through the simplest process among the above methods. However, it is difficult to completely separate a current collector and a cathode active material, the particle size distribution of the cathode active material is changed during a crushing process, and the battery characteristics of the recycled cathode active material are degraded due to a residual binder.

Therefore, there is an urgent need to develop a method of safely recycling a single-particle cathode active material from a waste cathode containing the single-particle cathode active material without discarded metal elements, without rate performance degradation, with a low process and cost, and in an environmentally friendly manner.

### [Disclosure]

### [Technical Problem]

Therefore, the present invention has been made in view of the above problems, and it is one object of the present invention to provide a recycled cathode active material and a method of recycling a cathode active material. According to the present invention, by immediately adding a lithium precursor without a pre-washing process to a cathode active material including single particles recovered after heat treatment of a waste cathode and performing annealing at a predetermined temperature for a predetermined time, residual lithium on the surface of the cathode active material may be reduced, and the crystal structure and crystallite size of the cathode active material may be restored to the level of a fresh cathode active material. Accordingly, when the cathode active material is applied to a lithium secondary battery, the efficiency, lifespan characteristics, and resistance characteristics may be excellent. In addition, the method of the present invention is environmentally friendly because the method does not use acid in the recovery and recycling of a cathode active material. Accordingly, process costs may be reduced as neutralization and wastewater treatment are not required. In addition, a cathode active material is recycled without decomposition of the cathode active material, so there are no discarded metal elements. In addition, since organic solvents are not used, there is no risk of generating toxic gases or explosion. In addition, since a pre-washing process is omitted, and a single-particle cathode active material is directly recycled from a waste cathode, economics and productivity may be greatly improved.

It is another object of the present invention to provide a secondary battery having excellent initial discharge capacity and capacity characteristics.

The above and other objects can be accomplished by the present invention described below.

### [Technical Solution]

I) In accordance with one aspect of the present invention, provided is a method of recycling a cathode active material, the method including (a) heat treating a waste cathode in which a cathode active material layer including a single-particle cathode active material is formed on a current collector to thermally decompose a binder and a conductive material in the cathode active material layer, separate the current collector from the cathode active material layer, and recover a cathode active material including single particles in the active material layer; (b) adding a lithium precursor to the recovered cathode active material and performing annealing at 400 to 1000 °C for 8 to 12 hours; and (c) washing the annealed cathode active material with a washing solution, or a method of recycling a single-particle mid-nickel cathode active material, the method including (a) heat treating a waste cathode in which a cathode active material layer including a single-particle mid-nickel cathode active material is formed on a current collector to thermally decompose a binder and a conductive material in the active material layer, separate the current collector from the cathode active material layer, and recover the single-particle mid-nickel cathode active material in the active material layer; (b) adding a lithium precursor to the recovered cathode active material and performing annealing at 400 to 1000 °C for 8 to 12 hours; and (c) washing the annealed cathode active material with a washing solution.
   In the present disclosure, the mid-nickel cathode active material may be a cathode active material including nickel in an amount of 40 mol% or more, as a specific example, 40 to 70 mol%, based on 100 mol% in total of metals other than lithium, i.e., based on 100 mol% in total of transition metals.
II) According to I), the cathode active material may include one or more selected from the group consisting of a nickel·cobalt·manganese (NCM)-based cathode active material, a nickel·cobalt·aluminum (NCA)-based cathode active material, and a nickel·cobalt·manganese·aluminum (NCMA)-based cathode active material, and may include Ni in an amount of 40 mol% or more based on 100 mol% in total of other metals other than Li.
III) According to I) or II), the heat treatment in step (a) may be performed at 300 to 650 °C.
IV) According to I) to III), the recovered cathode active material in step (a) may be subjected to annealing without washing.
V) According to I) to IV), in step (b), the lithium precursor may be added at least in an amount corresponding to a reduced amount of lithium based on a molar ratio of lithium in the cathode active material of step (a) based on an amount of lithium in the recovered cathode active material.
VI) According to I) to V), the lithium precursor may include one or more of LiOH, Li₂CO₃, LiNO₃, and Li₂O.
VII) According to I) to VI), the washing of step (c) may include mixing the annealed cathode active material and the washing solution, performing filtration, and then drying the solid cathode active material obtained after filtration.
VIII) According to I) to VII), the washing solution may be water or a basic aqueous lithium compound solution.
IX) According to I) to VIII), the method of recycling a cathode active material may include surface-coating the washed cathode active material to obtain a reusable cathode active material.
X) According to I) to IX), the surface coating may be performed by coating a surface with one or more of a metal, an organic metal, and a carbon component in solid or liquid form and performing heat treatment at 100 to 1200 °C.
XI) According to I) to X), a cathode active material recycled according to the method of recycling a cathode active material may have a D5 value of 1.95 µm or more or a D95 value of 7.11 µm or more on a particle size distribution (PSD).
XII) In accordance with another aspect of the present invention, provided is a cathode active material including one or more selected from the group consisting of lithium nickel oxide (LNO)-based cathode active materials, nickel·cobalt·manganese (NCM)-based cathode active materials, nickel·cobalt·aluminum (NCA)-based cathode active materials, and nickel-cobalt·manganese·aluminum (NCMA)-based cathode active materials, wherein the cathode active material includes single particles, and/or has an a-Axis lattice parameter of 2.8763 to 2.8783 Å, a c-Axis lattice parameter of 14.200 to 14.250 Å, and a crystallite size of 148 nm or more as measured by XRD analysis, and/or has a D5 value of 1.95 µm or more or a D95 value of 7.11 µm or more on a particle size distribution (PSD).
XIII) According to XII), the cathode active material may have a D50 value of 3.45 to 3.91 µm on a particle size distribution (PSD).
XIV) According to XII) or XIII), the cathode active material may include 1.09 % by weight or less in total of LiOH and Li₂CO₃.
XV) According to XII) to XIV), based on 100 mol% in total of other metals other than Li, the cathode active material may include Ni in an amount of greater than 70 mol%.
XVI) According to XII) to XV), a surface of the cathode active material may be coated with a coating agent containing a metal or carbon.
XVII) According to XII) to XVI), the cathode active material may be a recycled cathode active material.
XV) In accordance with yet another aspect of the present invention, provided is a secondary battery including the cathode active material according to any one of XII) to XVII).

### [Advantageous Effects]

According to the present invention, by immediately adding a lithium precursor without a pre-washing process to a cathode active material including single particles recovered after heat treatment of a waste cathode and performing annealing at a predetermined temperature for a predetermined time, residual lithium on the surface of the cathode active material can be reduced, and the crystal structure and crystallite size of the cathode active material can be restored to the level of a fresh cathode active material. Accordingly, the present invention has an effect of providing a cathode active material having excellent efficiency, lifespan characteristics, and resistance characteristics.

In addition, the present invention has an effect of providing a method of recycling a cathode active material. According to the method of the present invention, a single-particle cathode active material can be recycled directly from a waste cathode without deterioration of battery performance. In addition, the method of the present invention is environmentally friendly because the method does not use acid in the recovery and recycling of a cathode active material. Accordingly, process costs can be reduced as neutralization and wastewater treatment are not required. In addition, a cathode active material is recycled without decomposition of the cathode active material, so there are no discarded metal elements. In addition, since organic solvents are not used, there is no risk of generating toxic gases or explosion. In particular, since a pre-washing process is omitted and a single-particle cathode active material is directly recycled from a waste cathode, economics and productivity can be greatly improved.

### [Description of Drawings]

The following drawings attached to this specification illustrate embodiments of the present invention, and are presented to further understand the technical idea of the present invention in combination with the detailed description described below. Accordingly, the present invention is not limited to these drawings.
FIG. 1 is a diagram showing cathode scraps that are discarded after cutting an electrode plate from a cathode sheet.
FIG. 2 is an SEM image of a cathode active material recycled in Example 1.
FIG. 3 is an SEM image of a cathode active material recycled in Example 2.
FIG. 4 is an SEM image of a cathode active material recycled in Comparative Example 1.
FIG. 5 is an SEM image of a cathode active material recycled in Comparative Example 2.
FIG. 6 is an SEM image of a cathode active material recycled in Comparative Example 3.
FIG. 7 is an SEM image of a cathode active material recycled in Comparative Example 4.
FIG. 8 is an SEM image of a fresh cathode active material of Reference Example.
FIG. 9 is a flowchart for explaining a process for recycling a cathode active material according to the present invention.

### [Best Mode]

The present inventors have studied a method (direct recycled method) of directly recycling a cathode active material having excellent rate performance from a waste cathode without decomposing a single-particle cathode active material. During the above study, the present inventors confirmed that, when a lithium precursor was immediately added to a single-particle cathode active material, without a pre-washing process, recovered by heat treating a waste cathode and annealing was performed at a predetermined temperature for a predetermined time, residual lithium on the surface of a recycled single-particle cathode active material was reduced, and the crystal structure and crystallite size of the recycled single-particle cathode active material were restored to the level of a fresh cathode active material. Thus, the efficiency, lifespan characteristics, and resistance characteristics of a lithium secondary battery were improved. Based on these results, the present inventors conducted further studies to complete the present invention.

Hereinafter, a recycled cathode active material of the present invention, a method of recycling the same, and a secondary battery including the same are described in detail.

The terms and words which are used in the present specification and the appended claims should not be construed as being confined to common meanings or dictionary meanings but should be construed as meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Method of recycling single-particle cathode active material

The method of recycling a cathode active material according to the present invention includes step (a) of heat treating a waste cathode in which a cathode active material layer including a single-particle cathode active material is formed on a current collector to thermally decompose a binder and a conductive material in the active material layer, separate the current collector from the cathode active material layer, and recover a cathode active material including single particles in the cathode active material layer; step (b) of adding a lithium precursor to the recovered cathode active material and performing annealing at 400 to 1000 °C for 8 to 12 hours; and step (c) of washing the annealed cathode active material with a washing solution. In this case, residual lithium on the surface of the cathode active material may be reduced, and the crystal structure and crystallite size of the cathode active material may be restored to the level of a fresh cathode active material. In addition, when the recycled single-particle cathode active material is used to manufacture a lithium secondary battery, the lithium secondary battery may have excellent efficiency, lifespan characteristics, and resistance characteristics. In addition, since an acid is not used in the recovery and recycling of a cathode active material, eco-friendliness may be achieved. Accordingly, process costs may be reduced as neutralization and wastewater treatment are not required. In addition, a cathode active material is recycled without decomposition of the cathode active material, so there are no discarded metal elements. In addition, since organic solvents are not used, there is no risk of generating toxic gases or explosion. In particular, since a single-particle cathode active material is recycled directly from a waste cathode without deterioration of battery performance, economics and productivity may be greatly improved.

In addition, the method of recycling a cathode active material according to the present invention include step (a) of heat treating a waste cathode in which a cathode active material layer including a single-particle mid-nickel cathode active material is formed on a current collector to thermally decompose a binder and a conductive material in the cathode active material layer, separate the current collector from the cathode active material layer, and recover a cathode active material including single particles in the active material layer; step (b) of adding a lithium precursor to the recovered cathode active material and performing annealing at 400 to 1000 °C for 8 to 12 hours; and step (c) of washing the annealed cathode active material with a washing solution. In this case, residual lithium on the surface of the cathode active material may be reduced, and the crystal structure and crystallite size of the cathode active material may be restored to the level of a fresh cathode active material. In addition, when the recycled single-particle cathode active material is used to manufacture a lithium secondary battery, the lithium secondary battery may have excellent efficiency, lifespan characteristics, and resistance characteristics. In addition, since an acid is not used in the recovery and recycling of a cathode active material, eco-friendliness may be achieved. Accordingly, process costs may be reduced as neutralization and wastewater treatment are not required. In addition, a cathode active material is recycled without decomposition of the cathode active material, so there are no discarded metal elements. In addition, since organic solvents are not used, there is no risk of generating toxic gases or explosion. In particular, since a single-particle cathode active material is recycled directly from a waste cathode without deterioration of battery performance, economics and productivity may be greatly improved.

Hereinafter, each step of the method of recycling a cathode active material will be described in detail.

### (a) Recovering single-particle cathode active material from waste cathode

Step (a) of recovering a single-particle cathode active material from a waste cathode according to the present invention may preferably include a step of heat treating a waste cathode in which a cathode active material layer including a single-particle cathode active material is formed on a current collector to thermally decompose a binder and a conductive material in the active material layer, separate the current collector from the cathode active material layer, and recover a cathode active material including single particles in the cathode active material layer. When a cathode active material is recovered under these conditions, the process may be simple and a binder, a conductive material, and a current collector may be completely removed.

As another example, step (a) of recovering a cathode active material from a waste cathode according to the present invention may preferably include a step of heat treating a waste cathode in which a cathode active material layer including a single-particle mid-nickel cathode active material is formed on a current collector to thermally decompose a binder and a conductive material in the active material layer, separate the current collector from the cathode active material layer, and recover the single-particle mid-nickel cathode active material in the active material layer. When a mid-nickel cathode active material is recovered under these conditions, the process may be simple and a binder, a conductive material, and a current collector may be completely removed.

The waste cathode may be preferably a cathode separated from a lithium secondary battery discarded after use, or a defective cathode sheet or a cathode scrap generated in a process of manufacturing a lithium secondary battery, more preferably a cathode scrap remaining after blanking a cathode sheet to obtain a cathode plate.

The cathode active material layer of step (a) may preferably include a cathode active material, a binder, and a conductive material.

The cathode active material may include preferably one or more selected from the group consisting of a lithium cobalt oxide such as LiCoO₂ (hereinafter referred to as "LCO"); a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. More preferably, the cathode active material may be a nickel manganese-based lithium composite metal oxide, an NCM-based lithium composite transition metal oxide, or a mixture thereof. In this case, reversible capacity and thermal stability may be excellent.

As another specific example, the cathode active material may be a compound represented by Chemical Formula 1 below. In this case, reversible capacity and thermal stability may be excellent.

[Chemical Formula 1] LiₐNiₓMn_{y}Co_{z}M_{w}O_{2+δ}

(In Chemical Formula 1, M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, x+y+z+w=1)

For example, based on 100 mol% in total of other metals other than Li, the cathode active material may include Ni in an amount of 40 mol% or more, 40 to 95 mol%, more preferably 40 to 70 mol% (At this time, the cathode active material may be referred to as a mid-nickel cathode active material). Within this range, the lithium secondary battery to which the cathode active material is applied may have excellent initial discharge capacity, rate performance, capacity characteristics, and resistance characteristics.

In the present disclosure, the Ni content may be measured by ion chromatography (IC) commonly used in the technical field to which the present invention pertains, without particular limitation. As a specific example, an inductively coupled plasma (IC-ICP) analyzer, an IC-ICP-MS analyzer, or an IC-ICP-AEC analyzer may be used.

The cathode active material recovered in step (a) may be preferably single particles. More preferably, the cathode active material may not include secondary particles. In this case, since particle breakage does not occur during the electrode manufacturing process, performance degradation of a battery due to fine powder may be prevented. In addition, a recycled cathode active material that has excellent lifespan characteristics in a high-voltage environment, high thermal stability, and low gas generation during charge and discharge may be provided.

The single particle may be a single particle commonly used in the art to which the present invention pertains as long as the single particle follows the definition of the present invention. For example, the single particle may be a particle consisting of 30 or fewer nodules, preferably 1 to 20 nodules, more preferably 1 to 10 nodules, still more preferably 1 to 5 nodules, most preferably 1 nodule. In this case, since particle breakage does not occur during the electrode manufacturing process, performance degradation of a battery due to fine powder may be prevented. In addition, a recycled cathode active material that has excellent lifespan characteristics in a high-voltage environment, high thermal stability, and low gas generation during charge and discharge may be provided.

In the present disclosure, the nodule may mean a particle unit body that constitutes a single particle, and may be a single crystal lacking a crystalline grain boundary, or may mean a polycrystal with no apparent grain boundaries when observed at a magnification of 5,000 to 20,000 times using a scanning electron microscope (SEM) or electron backscatter diffraction (EBSD).

In the present disclosure, the number of nodules refers to the average number of nodules of cathode active material particles. A cathode containing a cathode active material is cut using the ion milling method, and a cross-sectional image of the cut cathode in the thickness direction was obtained using a scanning electron microscope (SEM). Then, within the cross-sectional image, at least 30 particles are selected for each of the largest and smallest cathode active material particles. The number of nodules in the cross-section of each cathode active material particle may be measured by SEM image analysis, and the average number of nodules may be obtained by taking the arithmetic mean.

The single particles may have an average particle diameter (D₅₀) of preferably 2 to 10 µm, more preferably 2 to 8 µm, still more preferably 3 to 6 µm.

In the present disclosure, the average particle diameter (D₅₀) may be defined as a particle diameter corresponding to 50 % of volume accumulation in a particle size distribution (PSD). For example, the average particle diameter (D₅₀) may be measured using a laser diffraction method. Specifically, as the method of measuring the average particle diameter (D₅₀) of the cathode active material, cathode active material particles are dispersed in a dispersion medium, the dispersed particles are placed in a commercially available laser diffraction particle size measuring device (e.g., Microtrac MT 3000), and the particles are irradiated with an ultrasonic wave of about 28 kHz with an output of 60 W. Then, an average particle diameter (D₅₀) corresponding to 50 % of volume accumulation in the measuring device may be calculated.

For example, the conductive material may be a carbon-based conductive material, preferably carbon black, CNT, or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

For example, the heat treatment in step (a) may be performed at 300 to 650 °C, preferably 400 to 600 °C, more preferably 500 to 600 °C, still more preferably 530 to 580 °C. Within this range, since the current collector is not melted and only the binder is removed, a cathode active material may be easily separated from the current collector.

For example, the heat treatment may be performed at a temperature increase rate of 1 to 20 °C/min, preferably 3 to 10 °C/min, more preferably 3 to 7 °C/min. Within this range, heat treatment may be performed without putting a strain on heat treatment equipment, and thermal shock may be prevented from being applied to cathode scraps.

For example, the heat treatment may be performed in air or under an oxygen atmosphere, preferably in air. In this case, the binder and conductive material may be removed because carbon components in the binder and conductive material react with oxygen and disappears as gases such as CO and CO₂.

For example, the oxygen may have a purity of 59 % or more, preferably 70 % or more, more preferably 80 % or more, still more preferably 90 % or more, still more preferably 90 to 99 %. Within this range, the binder and the conductive material may be completely removed, and the stability of Ni in the active material may be increased.

The purity (%) of the oxygen may be expressed as volume% or mol%.

The purity of oxygen in the present invention may be measured without particular limitations using measurement methods commonly used in the technical field to which the present invention pertains.

For example, the air or oxygen may be supplied at a rate of 1 to 20 L/min, preferably 1 to 15 L/min, more preferably 2 to 10 L/min, still more preferably 3 to 7 L/min. Within this range, a cathode active material may be easily separated from the current collector, and the separated cathode active material may be easily selected in powder form.

The heat treatment time may be preferably 10 minutes to 5 hours, more preferably 30 minutes to 5 hours, still more preferably 30 minutes to 2 hours, still more preferably 30 minutes to 1 hour. Within this range, since the current collector is not melted and only the binder is removed, a cathode active material may be easily separated from the current collector.

In the present disclosure, the heat treatment time is time of heat treatment performed at the corresponding heat treatment temperature, and does not include time required to reach the corresponding heat treatment temperature.

Preferably, the cathode active material recovered in step (a) may be subjected to the annealing step without pre-washing. In this case, since the washing process is omitted and lithium loss is prevented, the crystal structure of the cathode active material may be easily changed in the subsequent step. Accordingly, the charge capacity, resistance characteristics, and capacity characteristics of a battery may be improved, no wastewater is generated, the process may be simplified, and economics and productivity may be greatly improved.

In the present disclosure, the pre-washing may refer to washing performed before introducing a lithium precursor, and the post-washing may refer to washing performed after introducing a lithium precursor and annealing.

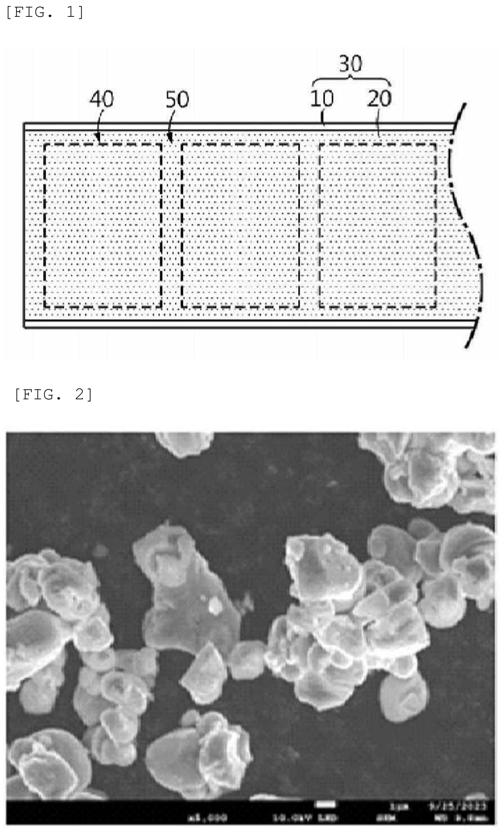

Referring to FIG. 1, aluminum foil 10, which is a long sheet-shaped cathode current collector, is coated with a cathode active material layer 20 including a cathode active material, a conductive material, and a binder to obtain a cathode sheet 30. Then, a cathode plate 40 is obtained by blanking the cathode sheet 30 to a certain size. At this time, portions remaining after the blanking are cathode scraps 50. The blanking is a means for cutting the cathode sheet.

In addition, the cathode active material layer 20 is formed by coating the aluminum foil 10 with slurry obtained by mixing a cathode active material, a conductive material, a binder, and a solvent. Since the slurry is very sensitive to environmental factors such as temperature, it is very difficult to determine the coating conditions. Accordingly, waste cathode sheets, such as the cathode scraps 50, are generated until the conditions for manufacturing the cathode sheet 30 of desired quality are determined through a predetermined test.

For reference, in the following examples, the cathode scraps 50 were used as waste cathodes.

### (b) Adding lithium precursor to recovered cathode active material and performing annealing

The method of recycling a cathode active material according to the present invention includes step (b) of adding a lithium precursor to the recovered cathode active material and performing annealing at 400 to 1000 °C for 8 to 12 hours. In this case, the crystal grain size of the recycled cathode active material may be increased, and the crystal structure may be restored to the level of a fresh cathode active material, thereby providing a cathode active material having excellent efficiency, lifespan characteristics, and resistance characteristics. In addition, since the pre-washing process of the recovered cathode active material is omitted, economics and productivity may be greatly improved.

For example, the annealing time may be 8 to 12 hours, preferably 9 to 12 hours, more preferably 9 to 11 hours, as a specific example, about 10 hours. Within this range, the crystal structure of a single-particle cathode active material may be sufficiently recovered. Thus, the crystallite size may be increased, and the crystal structure may be restored to the level of a fresh cathode active material. Accordingly, the efficiency, lifespan characteristics, and resistance characteristics of a battery may be excellent. When the annealing time exceeds the range, the residual amount of LiOH may be increased, resulting in deterioration of battery performance.

In annealing step (b), a lithium precursor may be added to the recovered cathode active material, and then annealing may be performed in air or under an oxygen (O₂) atmosphere, preferably in air. In this case, crystallinity, such as an increase in the crystallinity of the cathode active material and recovery of a crystal structure, may be improved, and the battery characteristics of a recycled cathode active material may be improved.

The annealing temperature may be preferably 500 to 900 °C, more preferably 600 to 880 °C, still more preferably 700 to 800 °C. In this case, crystallinity, such as an increase in the crystallinity of the cathode active material and recovery of a crystal structure, may be improved, and the battery characteristics of a recycled cathode active material may be improved.

The lithium precursor may include preferably one or more selected from the group consisting of LiOH, Li₂CO₃, LiNO₃, and Li₂O.

In step (b), the lithium precursor may be preferably added at least in an amount corresponding to the reduced amount of lithium based on a molar ratio of lithium in the cathode active material of step (a) based on the amount of lithium in the recovered cathode active material. As a specific example, when the recovered cathode active material of step (a) is the cathode active material represented by Chemical Formula 1, the lithium precursor may be added in an amount corresponding to a molar ratio of lithium of 0.0001 to 0.2, preferably 0.001 to 0.1, more preferably 0.001 to 0.07, still more preferably 0.001 to 0.03, still more preferably 0.001 to 0.02, still more preferably 0.005 to 0.017, still more preferably 0.007 to 0.015, most preferably 0.009 to 0.013 based on a molar ratio of 1 of lithium in the cathode active material. Within this range, by supplementing lithium to the recycled cathode active material, crystallinity may be increased, or a crystal structure may be recovered. Thus, the battery characteristics of the recycled cathode active material may be improved.

As another example, the lithium precursor may be added in an amount that may provide lithium corresponding to 1 to 40 mol%, preferably 1 to 30 mol%, still more preferably 7 to 20 mol% based on 100 mol% in total of lithium contained in the cathode active material as a raw material. Within this range, since there is no residual precursor that causes an increase in the resistance of the recycled cathode active material, battery characteristics may be improved. In addition, compared to the past, economic advantages may be obtained because the crystal structure may be restored with a small amount of lithium precursor.

The annealing temperature may be adjusted within a limited range according to the melting point of the lithium precursor. For example, in the case of Li₂CO₃ as the lithium precursor, the melting point thereof is 723 °C, and thus annealing may be performed at preferably 700 to 900 °C, more preferably 710 to 780 °C. In the case of LiOH as the lithium precursor, the melting point thereof is 462 °C, and thus annealing may be performed at preferably 400 to 600 °C, more preferably 450 to 480 °C. Within this range, the crystal structure may be recovered, and thus the efficiency, lifespan characteristics, and resistance characteristics of a battery may be excellent.

The annealing temperature is preferably a temperature exceeding the melting point of the lithium precursor. However, when the annealing temperature exceeds 1000 °C, thermal decomposition of the cathode active material may occur, resulting in deterioration of battery performance. Accordingly, the annealing temperature is preferably 1000 °C or lower.

The annealing temperature may preferably be reached at a heating rate of 1 to 10 °C/min, more preferably 1 to 7 °C/min, still more preferably 2 to 4 °C/min. In this case, the crystallinity of a recycled cathode active material may be further increased, and thus the battery characteristics of a recycled cathode active material may be improved.

For example, the annealing step may include a cooling process. As a specific example, the cooling process may be natural cooling within a furnace. In this case, the crystallinity of a recycled cathode active material may be further increased, and thus the battery characteristics of a recycled cathode active material may be improved.

In the present disclosure, annealing may follow the definition used in the technical field to which the present invention pertains. As a specific example, annealing may be defined as a heat treatment operation that heals deformation or lattice defects and increases crystallinity by heating a cathode active material with a deformed structure or lattice defects for an appropriate period of time at a temperature, i.e., a temperature above a recrystallization temperature, that allows the atoms of main components in the cathode active material to sufficiently diffuse and move.

### (c) Washing annealed cathode active material (post-washing)

The method of recycling a cathode active material according to the present invention includes step (c) of washing the annealed cathode active material with a washing solution. In this case, since a lithium precursor that tends to remain on the surface of the cathode active material is removed by the washing solution, in the subsequent steps, performance degradation and gas generation of a battery due to the reaction between the residual lithium precursor and the electrolyte solution may be prevented.

The washing may preferably include a step of mixing the annealed cathode active material and the washing solution and then performing filtration and a step of drying the solid cathode active material obtained after filtration. In this case, excess lithium remaining in the cathode active material may be effectively removed.

The washing may preferably include a step of mixing the annealed cathode active material and the washing solution and then performing filtration and a step of drying the solid cathode active material obtained after filtration. In this case, lithium precursors such as LiOH and Li₂CO₃ that are likely to remain on the surface of the cathode active material may be effectively removed with a small amount of washing solution, and thus wastewater may be reduced.

For example, the weight ratio of the annealed active material to the washing solution may be 1:0.5 to 1:5.5, preferably 1:0.5 to 1:4.5, more preferably 1:0.5 to 1:3.5, still more preferably 1:0.5 to 1:2.5. In this case, lithium precursors such as LiOH and Li₂CO₃ that are likely to remain on the surface of the cathode active material may be effectively removed with a small amount of washing solution, and thus wastewater may be reduced.

The washing solution may be preferably water or a basic aqueous lithium compound solution, more preferably water. Excess lithium is added to suppress the cation mixing phenomenon that easily occurs in a recycled cathode active material, especially a recycled mid-nickel cathode active material. As a result, lithium precursors such as LiOH and Li₂CO₃ may be remained. In this case, the residual lithium precursors may be effectively removed with a small amount of washing solution. In addition, no wastewater treatment is required, and the rate performance of a battery may be greatly improved.

The water may be preferably distilled water or deionized water. In this case, lithium precursors such as LiOH and Li₂CO₃ that are likely to remain on the surface of the recycled cathode active material may be effectively removed with a small amount of washing solution. Thus, wastewater may be reduced, and the rate performance of a battery may be greatly improved.

The basic aqueous lithium compound solution may include a lithium compound in an amount of preferably greater than 0 % by weight and 15 % by weight or less, more preferably greater than 0 % by weight and 10 % by weight or less. In this case, lithium precursors such as LiOH and Li₂CO₃ that are likely to remain on the surface of the cathode active material may be effectively removed with a small amount of washing solution. Thus, wastewater may be reduced, and the rate performance of a battery may be greatly improved.

Mixing of the annealed cathode active material and the washing solution may preferably be performed by agitation. The agitation is not particularly limited, but may be mechanical agitation or ultrasonic agitation.

The stirring may be performed for preferably 30 minutes or less, more preferably 20 minutes or less, still more preferably 15 minutes or less, still more preferably 5 to 10 minutes. Within this range, residual lithium may be effectively removed.

### (d) Surface-coating washed cathode active material to obtain reusable cathode active material

Optionally, the method of recycling a cathode active material according to the present invention may include step (d) of surface-coating the washed cathode active material to obtain a reusable cathode active material. In this case, structural stability and electrochemical performance may be improved while maintaining the excellent intrinsic properties of the cathode active material.

In the surface coating, preferably, the surface may be coated with a coating agent including one or more of a metal, an organic metal, and a carbon component in a solid or liquid manner, and then heat treatment may be performed at 100 to 1200 °C. In this case, structural stability and electrochemical performance may be improved while maintaining the excellent intrinsic properties of the cathode active material.

The coating agent including a metal may be preferably a coating agent including one or more selected from the group consisting of B, W, Al, Ti, Mg, Ni, Co, Mn, Si, Zr, Ge, Sn, Cr, Fe, V, and Y, more preferably a coating agent including one or more selected from the group consisting of B, W, Al, Ti, and Mg, still more preferably a coating agent including boron (B), tungsten (W), or a mixture thereof, still more preferably a coating agent including tungsten (W) and boron (B), as a specific example, a coating agent including tungsten boride (WB). In this case, resistance characteristics and lifespan characteristics may be improved.

The boron-containing coating agent may include preferably one or more selected from the group consisting of H₃BO₃, B₂O₃, C₆H₅B(OH)₂, (C₆H₅O)₃B, [CH₃(CH₂)₃O]₃B, C₁₃H₁₉BO₃, C₃H₉B₃O₆, and (C₃H₇O)₃B, more preferably H₃BO₃. In this case, the lithium secondary battery may have excellent resistance characteristics and lifespan characteristics.

For example, the coating agent including a metal may be an oxide or an acid including the metal as an element in the molecule thereof.

As the coating agent including an organic metal, coating agents including an organic metal compound containing a metal commonly used in the art to which the present invention pertains may be used without particular limitation. As a specific example, metal alkoxides may be used.

As the coating agent including a carbon component, coating agents including a carbon component commonly used in the art to which the present invention pertains may be used without particular limitation. As a specific example, sugars such as sucrose may be used.

For example, based on components coated on the surface of the cathode active material excluding a solvent, based on 1 mol% of the metal in the cathode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the excellent intrinsic properties of the cathode active material.

The heat treatment temperature may be preferably 100 to 1000 °C, more preferably 200 to 1000 °C, still more preferably 200 to 500 °C. Within this range, performance degradation due to the thermal decomposition of a recycled cathode active material may be prevented, and structural stability and electrochemical performance may be improved.

The heat treatment time may be preferably 1 to 16 hours, more preferably 3 to 7 hours. Within this range, structural stability and electrochemical performance may be improved while maintaining the excellent intrinsic properties of the cathode active material.

Coating methods commonly used in the art to which the present invention pertains may be used as the coating method of the present invention without particular limitation. For example, a liquid method of mixing a cathode active material and a liquid coating agent, a mechanochemical method using the high mechanical energy of ball milling, a fluid bed coating method, a spray drying method, a precipitation method of precipitating a coating agent onto the surface of a cathode active material in an aqueous solution, a method using reaction between a vapor phase coating agent and a cathode active material, or sputtering may be used.

For example, the metal, organic metal, and carbon component may have a spherical shape, a plate shape, a square shape, or a needle shape. For example, such a shape may be controlled by changing process conditions in the preparation process. Each shape is not particularly limited as long as the shape follows a definition commonly accepted in the art to which the present invention pertains.

The coating agent may have preferably an average diameter of 1 to 1000 nm and a specific surface area of 10 to 100 m²/g, more preferably an average diameter of 10 to 100 nm and a specific surface area of 20 to 100 m²/g. Within this range, the coating agent may be uniformly adhered to the surface of the recycled cathode active material, thereby improving the structural stability of the recycled cathode active material. Thus, reduction of the lifespan of the cathode active material and degradation of the electrochemical performance thereof due to lattice deformation or collapse of a crystal structure may be prevented.

In the present disclosure, the average diameter may be measured by a measuring method commonly used in the art to which the present invention pertains. For example, the average diameter may be measured by a laser diffraction method. Specifically, cathode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D₅₀) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated based on the amount of nitrogen gas adsorbed under liquid nitrogen temperature (77 K) using BELSORP-mino II manufactured by BEL Japan Co.

For example, the cathode active material recycled according to the method of recycling a cathode active material may have a D5 value of 1.95 µm or more, preferably 1.96 µm or more, more preferably 1.96 to 2.20 µm, still more preferably 1.98 to 2.1 µm on a particle size distribution (PSD). Within this range, efficiency, lifespan characteristics, and resistance characteristics may be excellent.

For example, the cathode active material recycled according to the method of recycling a cathode active material may have a D50 value of 3.45 to 3.91 µm, preferably 3.50 to 3.90 µm, more preferably 3.70 to 3.90 µm on a particle size distribution (PSD). Within this range, efficiency, lifespan characteristics, and resistance characteristics may be excellent.

For example, the cathode active material recycled according to the method of recycling a cathode active material may have a D95 value of 7.11 µm or more, preferably 7.15 µm or more, more preferably 7.15 to 7.60 µm, still more preferably 7.15 to 7.55 µm on a particle size distribution (PSD). Within this range, efficiency, lifespan characteristics, and resistance characteristics may be excellent.

In the present disclosure, in the particle size distribution, the particle diameter may be measured using a laser diffraction particle size measuring device. As a specific example, the average diameter may be measured by a laser diffraction method. Specifically, cathode active material particles are dispersed in a dispersion medium, the dispersed particles are placed in a laser diffraction particle size measuring device such as Microtrac MT 3000, and the particles are irradiated with an ultrasonic wave of about 28 kHz with an output of 60 W. Then, the particle sizes corresponding to 5% (D₅), 50% (D₅₀), and 95% (D₉₅) of the volume accumulation in the measuring device are measured. Here, the particle diameter corresponding to 50% of the volume accumulation is referred to as the average particle diameter (D₅₀).

The cathode active material recycled according to the method of recycling a cathode active material may include LiOH in an amount of preferably 0.17 % by weight or less, more preferably 0.11 % by weight or less, still more preferably 0.09 % by weight or less, still more preferably 0.01 to 0.09 % by weight. Within this range, initial discharge capacity, rate performance, and capacity characteristics may be excellent.

The cathode active material recycled according to the method of recycling a cathode active material may include Li₂CO₃ in an amount of preferably 0.96 % by weight or less, more preferably 0.1 to 0.96 % by weight. Within this range, initial discharge capacity and capacity characteristics may be excellent.

The cathode active material recycled according to the method of recycling a cathode active material may include Li₂CO₃ and LiOH in a total amount of preferably 1.09 % by weight or less, more preferably 1.00 % by weight or less, still more preferably 0.98 % by weight or less, still more preferably 0.01 to 0.98 % by weight. Within this range, initial discharge capacity and capacity characteristics may be excellent.

In the present disclosure, the amount of residual Li may be measured using a pH titrator T5 (Mettler toledo Co.). Specifically, 5 g of the cathode active material is dispersed in 100 ml of distilled water and mixed at 300 rpm for 5 minutes, and then filtering is performed to filter out an active material and obtain a filtrate. Change in pH values is measured while titrating the filtrate with a 0.1 M HCl solution. Based on the measurement result, a pH titration curve is obtained. Using the pH titration curve, the amounts of residual LiOH and Li₂CO₃ in the cathode active material are calculated.

For example, the cathode active material recycled according to the method of recycling a cathode active material may have an a-Axis lattice parameter of 2.8763 to 2.8783 Å, preferably 2.8767 to 2.8782 Å, more preferably 2.8770 to 2.8781 Å, still more preferably 2.8776 to 2.8781 Å as measured by XRD analysis. Within this range, a lattice structure similar to that of the cathode active material as a raw material may be obtained.

For example, the cathode active material recycled according to the method of recycling a cathode active material may have a c-Axis lattice parameter of 14.200 to 14.250 Å, preferably 14.203 to 14.250 Å, more preferably 14.205 to 14.249 Å, still more preferably 14.235 to 14.249 Å as measured by XRD analysis. Within this range, a lattice structure similar to that of the cathode active material as a raw material may be obtained.

For example, the cathode active material recycled according to the method of recycling a cathode active material may have a crystallite size of 148 nm or more, preferably 149 nm or more, more preferably 149 to 168 nm, still more preferably 149 to 157 nm, still more preferably 149 to 152 nm as measured by XRD analysis. In this case, by performing annealing at a predetermined temperature for a predetermined time, the crystal grain size may be increased, and the crystal structure of the cathode active material may be restored to the level of a fresh cathode active material. Thus, efficiency, lifespan characteristics, and resistance characteristics may be excellent.

In the present disclosure, the lattice parameters and crystallite size of the cathode active material may be measured by XRD analysis. Specifically, the lattice parameter may be calculated by indexing data measured through X-ray diffraction (XRD) analysis using Cu Kα X-rays through Rietveld refinement, and the crystallite size may be calculated using the Scherrer equation from the XRD measurement data.

In the present disclosure, crystal grain (crystalline) refers to a single crystal particle unit with a regular atomic arrangement.

In addition, the present invention may provide a recycled cathode active material prepared using the method of recycling a cathode active material. When the recycled cathode active material of the present invention is applied, the initial discharge capacity, rate performance, capacity characteristics, and resistance characteristics of a battery may be excellent.

### Single-particle cathode active material

The cathode active material of the present invention includes one or more selected from the group consisting of lithium nickel oxide (LNO)-based cathode active materials, nickel·cobalt·manganese (NCM)-based cathode active materials, nickel·cobalt·aluminum (NCA)-based cathode active materials, and nickel ·cobalt ·manganese ·aluminum (NCMA)-based cathode active materials. The cathode active material includes single particles, and/or has an a-Axis lattice parameter of 2.8763 to 2.8783 Å, a c-Axis lattice parameter of 14.200 to 14.250 Å, and a crystallite size of 148 nm or more as measured by XRD analysis, and/or has a D5 value of 1.95 µm or more or a D95 value of 7.11 µm or more on a particle size distribution (PSD). In this case, residual lithium on the surface of the cathode active material may be reduced, and the crystal structure of the cathode active material may be restored to the level of a fresh cathode active material. When the cathode active material is applied to a lithium secondary battery, the efficiency, lifespan characteristics, and resistance characteristics of the battery may be excellent.

The cathode active material may include preferably one or more selected from the group consisting of a lithium cobalt oxide such as LiCoO₂ (hereinafter referred to as "LCO"); a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. More preferably, the cathode active material may be a nickel manganese-based lithium composite metal oxide, an NCM-based lithium composite transition metal oxide, or a mixture thereof. In this case, electrochemical performance, resistance characteristics, and capacity characteristics may be excellent.

As a specific example the cathode active material may be a compound represented by Chemical Formula 1 below. In this case, electrochemical performance, resistance characteristics, and capacity characteristics may be excellent.

[Chemical Formula 1] LiₐNiₓMn_{y}Co_{z}M_{w}O_{2+δ}

(In Chemical Formula 1, M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, x+y+z+w=1)

For example, the cathode active material may have a D5 value of 1.95 µm or more, preferably 1.96 µm or more, more preferably 1.96 to 2.20 µm, still more preferably 1.98 to 2.10 µm on a particle size distribution (PSD). Within this range, efficiency, lifespan characteristics, and resistance characteristics may be excellent.

For example, the cathode active material may have a D50 value of 3.45 to 3.91 µm, preferably 3.50 to 3.90 µm or more, more preferably 3.70 to 3.90 µm on a particle size distribution (PSD). Within this range, efficiency, lifespan characteristics, and resistance characteristics may be excellent.

For example, the cathode active material may have a D95 value of 7.11 µm or more, preferably 7.15 µm or more, more preferably 7.15 to 7.60 µm, still more preferably 7.15 to 7.55 µm, still more preferably 7.15 to 7.30 µm on a particle size distribution (PSD). Within this range, efficiency, lifespan characteristics, and resistance characteristics may be excellent.

The cathode active material may include Li₂CO₃ and LiOH in a total amount of preferably 1.09 % by weight or less, more preferably 1.00 % by weight or less, still more preferably 0.98 % by weight or less, still more preferably 0.01 to 0.98 % by weight. Within this range, initial discharge capacity and capacity characteristics may be excellent.

The cathode active material may include Li₂CO₃ in an amount of preferably 0.96 % by weight or less, more preferably 0.1 to 0.96 % by weight. Within this range, initial discharge capacity and capacity characteristics may be excellent.

The cathode active material may include LiOH in an amount of preferably 0.17 % by weight or less, more preferably 0.11 % by weight or less, still more preferably 0.09 % by weight or less, still more preferably 0.01 to 0.09 % by weight. Within this range, initial discharge capacity, rate performance, and capacity characteristics may be excellent.

For example, the cathode active material may have an a-Axis lattice parameter of 2.8763 to 2.8783 Å, preferably 2.8767 to 2.8782 Å, more preferably 2.8770 to 2.8781 Å, still more preferably 2.8776 to 2.8781 Å as measured by XRD analysis. Within this range, a lattice structure similar to that of the cathode active material as a raw material may be obtained.

For example, the cathode active material may have a c-Axis lattice parameter of 14.200 to 14.250 Å, preferably 14.203 to 14.250 Å, more preferably 14.205 to 14.249 Å, still more preferably 14.235 to 14.249 Å as measured by XRD analysis. Within this range, a lattice structure similar to that of the cathode active material as a raw material may be obtained.

For example, the cathode active material may have a crystallite size of 148 nm or more, preferably 149 nm or more, more preferably 149 to 168 nm, still more preferably 149 to 157 nm, still more preferably 149 to 152 nm as measured by XRD analysis. Within this range, the crystallite size may be similar with that of a fresh cathode active material, efficiency, lifespan characteristics, and resistance characteristics may be excellent, and capacity may be improved.

Based on 100 mol% in total of other metals other than Li, the cathode active material may include Ni in an amount of preferably greater than 70 mol%, more preferably 71 to 95 mol%, still more preferably 80 to 95 mol%. Within this range, battery characteristics may be excellent.

The cathode active material may include preferably single particles. More preferably, the cathode active material may not include secondary particles. In this case, since particle breakage does not occur during the electrode manufacturing process, performance degradation of a battery due to fine powder may be prevented. In addition, a recycled cathode active material that has excellent lifespan characteristics in a high-voltage environment, high thermal stability, and low gas generation during charge and discharge may be provided.

For example, the surface of the cathode active material may be coated with a metal or carbon, preferably a metal. In this case, the structural stability of the cathode active material may be improved without chemical and physical changes thereof, thereby improving rate performance, lifespan characteristics, and electrochemical properties such as capacity. In addition, substitution with heterogeneous elements occurs on the surface of the cathode active material, and as a result, the amount of residual lithium and pH may be reduced, thereby improving the physicochemical properties of a battery.

The metal includes preferably one or more selected from the group consisting of B, W, Al, Ti, Mg, Ni, Co, Mn, Si, Zr, Ge, Sn, Cr, Fe, V, and Y, more preferably one or more selected from the group consisting of B, W, Al, Ti, and Mg, still more preferably boron (B), tungsten (W), or a mixture thereof, still more preferably tungsten (W) and boron (B), as a specific example, tungsten boride (WB). In this case, resistance characteristics and lifespan characteristics may be improved.

For example, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol% based on 1 mol% of metals in the recycled cathode active material before coating. Within this range, structural stability and electrochemical performance may be improved while maintaining the excellent intrinsic properties of the cathode active material.

In the surface coating, preferably, the surface may be coated with a coating agent including one or more of a metal, an organic metal, and a carbon component in a solid or liquid manner, and then heat treatment may be performed at 100 to 1200 °C. In this case, structural stability and electrochemical performance may be improved while maintaining the excellent intrinsic properties of the cathode active material.

For example, the cathode active material may be a recycled cathode active material. In this case, economics and productivity may be excellent.

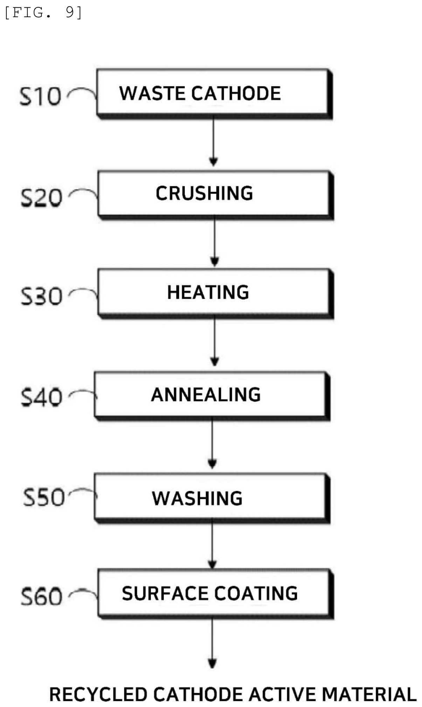

FIG. 9 below is a flowchart for explaining a process for recycling a single-particle cathode active material according to one embodiment of the present invention.

Referring to FIG. 9, first, cathode scraps as waste cathodes are prepared (step S10).

For example, aluminum foil is coated with slurry prepared by adding N-methyl pyrrolidone (NMP) to a single-particle NCM-based lithium composite transition metal oxide, carbon black, and polyvinylidene fluoride and performing mixing, and then drying is performed in a vacuum oven set to about 120 °C to obtain a cathode sheet. Then, the cathode sheet is punched out to obtain a cathode plate of a certain size. In this process, cathode scraps are generated.

The cathode scrap includes a cathode active material layer formed on an aluminum foil. After volatilizing a solvent, the cathode active material layer has a structure in which a cathode active material and a conductive material are combined by a binder. Accordingly, when the binder is removed, the cathode active material is separated from the aluminum foil.

Specifically, the NCM-based lithium composite transition metal oxide may be a cathode active material including single-particle mid-nickel.

Next, the prepared cathode scraps are crushed into pieces of appropriate sizes (step S20).

Here, the crushing includes cutting or shredding cathode scraps into easy-to-handle sizes. As a specific example, the crushed cathode scraps may have a size of 1 cm × 1 cm. For example, the crushing may be performed using a dry crushing device such as a hand-mill, a pin-mill, a disk-mill, a cutting-mill, and a hammer-mill. To increase productivity, a high-speed cutting machine may be used.

Preferably, whether to perform the crushing or the size of the pieces may be determined by considering the handling of cathode scraps and the characteristics of equipment used in the subsequent process. For example, when using equipment capable of continuous processing, cathode scraps must be crushed into smaller pieces because the pieces must have good fluidity.

Next, the cathode scraps are heat-treated to recover a cathode active material (step S30).

Here, heat treatment is performed to thermally decompose the binder in the active material layer. Through heat treatment as above, a binder and a conductive material in the active material layer are thermally decomposed into CO₂ and H₂O and removed. That is, the binder is removed. Thus, the cathode active material may be separated from the current collector, and the separated cathode active material may be easily selected as powder form. Accordingly, with just step S30, the active material layer may be separated from the current collector, and further, the cathode active material within the active material layer may be recovered in powder form.

The recovered cathode active material may include single particles. As a specific example, the recovered cathode active material may not include secondary particles. In this case, since particle breakage does not occur during the electrode manufacturing process, performance degradation of a battery due to fine powder may be prevented. In addition, a recycled cathode active material that has excellent lifespan characteristics in a high-voltage environment, high thermal stability, and low gas generation during charge and discharge may be provided.

The heat treatment may be performed in air or under an oxygen atmosphere, specifically, in air. When the heat treatment is performed in a reducing gas or inert gas atmosphere, the binder and the conductive material are carbonized rather than thermally decomposed. When the binder and the conductive material are carbonized, carbon components remain on the surface of the cathode active material, resulting in deterioration in the performance of a recycled cathode active material. However, when the heat treatment is performed in air or under an oxygen atmosphere, both the binder and the conductive material are removed because carbon components in the binder and conductive material reacts with oxygen, are converted into gases such as CO and CO₂, and disappears.

The heat treatment is performed at preferably 300 to 650 °C, as a specific example, 550 °C. When the heat treatment is performed at a temperature less than 300 °C, since the binder is not removed, separation of the current collector is difficult. When the heat treatment is performed at a temperature exceeding 650 °C, the current collector melts, making separation of the current collector impossible.

The heat treatment is performed at a temperature increase rate of preferably 1 to 20 °C/min, more preferably 3 to 10 °C/min, as a specific example, 5 °C/min. Within this range, heat treatment may be performed without causing strain to heat treatment equipment, and thermal shock to cathode scraps may be prevented.

The heat treatment may be performed until the binder is completely thermally decomposed. For example, the heat treatment may be performed for preferably 30 minutes or more, more preferably 30 minutes to 5 hours, as a specific example, 30 minutes. Within this range, the binder may be completely thermally decomposed, and thermal decomposition efficiency may be excellent.

For example, the heat treatment may be performed using various types of furnaces. For example, a box-type furnace may be used. Considering productivity, a rotary kiln capable of continuous processing may be used.

After the heat treatment, slow or rapid cooling in air may be performed.

Next, a lithium precursor is added to the recovered cathode active material, and annealing is performed (step S40) .

In the annealing step, it is important to add the lithium precursor immediately to the recovered cathode active material without a washing process and perform annealing. In this case, since the pre-washing process is omitted, lithium loss may be prevented. Thus, in the subsequent steps, the crystal structure of the cathode active material may be easily changed, and the charge capacity, resistance characteristics, and capacity characteristics of a battery may be improved. In addition, no wastewater is generated, the process may be simplified, economics and productivity may be greatly improved, and battery performance may be improved.

In addition, loss of lithium in the cathode active material occurs during preceding step S30. In step S40, the loss amount of lithium is supplemented. In addition, during the preceding step, a deformed structure (e.g., Co₃O₄ in the case of an LCO active material) may be formed on the surface of the single-particle cathode active material. In step S40, the crystal structure of the single-particle cathode active material may be recovered through annealing, thereby improving the battery characteristics of a recycled single-particle cathode active material, or restoring the battery characteristics of the recycled single-particle cathode active material to the level of battery characteristics of a fresh cathode active material. Here, "fresh" is a concept opposite to "recycling", a fresh material means that the material was made for the first time, and the fresh material is the same word as "raw material" used in the examples.

As a specific example, Li₂CO₃ is used as the lithium precursor.

Based on the molar ratio of lithium to other metals in a fresh cathode active material contained in the cathode active material layer, the lithium precursor is preferably added in a minimum amount corresponding to the lost lithium molar ratio. When an excess of lithium precursor is added relative to the amount of lithium lost, the unreacted lithium precursor may remain in a recycled cathode active material, which increases resistance. Accordingly, an appropriate amount of the lithium precursor needs to be added. For example, when the molar ratio of lithium to other metals in a fresh cathode active material is 1, the lithium precursor may be added in an amount such that the molar ratio of lithium is 0.001 to 0.4, preferably 0.01 to 0.2.

As a specific example, when the lithium precursor is added in a molar ratio of 0.09 to 0.1 (based on lithium), which is a loss ratio relative to a lithium content in a fresh cathode active material, based on ICP analysis results, the capacity may be increased to a level equivalent to that of the fresh cathode active material. Here, the ICP analysis results have an error value of about ±0.02.

For example, the annealing time may be 8 to 12 hours, as a specific example, 10 hours. In this case, the crystal grain size of the single-particle cathode active material may be increased, the crystal structure may be sufficiently recovered, and the crystal structure may be restored to the level of a fresh cathode active material. Thus, the efficiency, lifespan characteristics, and resistance characteristics of a manufactured lithium secondary battery may be improved. In addition, since the pre-washing process of the recovered cathode active material is omitted, lithium loss may be prevented. Thus, in the subsequent steps, the crystal structure of the cathode active material may be easily changed, and the charge capacity, resistance characteristics, and capacity characteristics of a battery may be improved. In addition, no wastewater is generated, the process may be simplified, and economics and productivity may be greatly improved.

At this time, the annealing equipment may be the same or similar equipment as in heat treatment step S30.

For example, the annealing may be performed at 400 to 1000 °C under an oxygen (O₂) atmosphere or in air, as a specific example, at 750 °C in air.

The annealing temperature is preferably a temperature exceeding the melting point of the lithium precursor. However, since performance degradation occurs due to thermal decomposition of the cathode active material at a temperature exceeding 1000 °C, the annealing temperature should not exceed 1000 °C. When Li₂CO₃ is used as the lithium precursor, the annealing temperature is preferably 700 to 900 °C, more preferably 710 to 780 °C, most preferably 750 to 780 °C. In addition, when LiOH is used as the lithium precursor, the annealing temperature is preferably 400 to 600 °C, more preferably 450 to 480 °C, most preferably 470 to 480 °C.

Next, the annealed cathode active material is washed (step S50).

In the washing step S50, lithium precursors that do not participate in the reaction in annealing step S40 and exist on the surface of the cathode active material in the form of LiOH and Li₂CO₃ are removed. In addition, the impurities, such as lithium carbonate (Li₂CO₃), remaining on the surface of a recycled cathode active material may react with an electrolyte solution, deteriorating battery performance and generating gas, so these impurities must be thoroughly removed.

In washing step S50, preferably, the cathode active material of annealing step S40 and the washing solution are mixed in a weight ratio of 1:0.5 to 1:5.5, as a specific example, 1:1, filtration is performed, and then the obtained solid cathode active material is dried. In this case, since residual lithium is removed with a small amount of washing solution, wastewater may be reduced.

The washing solution may be preferably distilled water or a basic aqueous lithium compound solution containing a alkaline lithium compound in an amount of greater than 0 % by weight and 10 % by weight or less, more preferably distilled water. In this case, safety and economy may be ensured, and the elution of transition metals present in the recycled cathode active material may be prevented.

In the washing, preferably, the annealed cathode active material and the washing solution are mixed, filtration is performed, and the obtained solid cathode active material is dried.

Mixing of the annealed cathode active material and the washing solution may preferably be performed by agitation. The agitation is not particularly limited, but may be mechanical agitation or ultrasonic agitation.

The mechanical agitation may be preferably performed at 250 to 350 rpm for 3 to 10 minutes.

The filtration may be preferably reduced pressure filtration using a filter, and the drying may be vacuum drying at 120 to 140 °C.

Next, as an optional step, the washed cathode active material may be surface-coated (step S60).

For example, in the surface coating, the surface is coated with a coating agent containing metals, organic metals, or carbon in a solid or liquid phase and heat-treated. When the heat treatment temperature is too low, formation of a desired surface protection layer by the dissimilar metals may not occur. When the heat treatment temperature is too high, due to thermal decomposition of the cathode active material, battery performance may deteriorate.

Specifically, when the washed cathode active material is coated with a metal oxide such as B, W, and B-W or an acid and heat-treated, a surface protection layer such as a lithium boron oxide layer is formed on the surface of the cathode active material.

The surface coating may be performed using a solid-phase or liquid-phase method, as a specific example, mixing, milling, spray drying, or grinding.

When the molar ratio of lithium to other metals in the cathode active material in the annealing step S40 is 1:1, lithium in the cathode active material reacts with the coating agent in surface coating step S60, and the molar ratio of lithium to other metal in the cathode active material is less than 1:1. In this case, the capacity of a battery containing the recycled cathode active material may not be fully (up to 100 %) expressed. However, in annealing step S40, when an excess of the lithium precursor is added so that lithium is contained in a greater molar ratio of 0.0001 to 0.1 compared to other metals in the recycled cathode active material, a surface protection layer is formed in surface coating step S60, and the molar ratio of lithium to other metals in the cathode active material becomes 1:1, thereby preventing battery capacity degradation.

### Secondary battery

A secondary battery of the present invention includes the recycled single-particle cathode active material. In this case, lithium components remaining the surface of the cathode active material may be significantly reduced, and thus initial discharge capacity, rate performance, capacity characteristics, and resistance characteristics may be excellent. In addition, since acids and organic solvents are not used in the recovery and recycling of the single-particle cathode active material, eco-friendliness may be achieved. In particular, since the washing step is omitted, economics and productivity may be excellent.

Description of the secondary battery of the present invention may include all of the description of the recycled single-particle cathode active material and the method of recycling a single-particle cathode active material described above, and thus repeated description is omitted in this specification.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

### Example 1

After blanking a cathode plate, discarded cathode scraps (current collector: aluminum foil, cathode active material: NCM-based lithium composite transition metal oxide, containing 61 mol% Ni based on 100 mol% of other metals other than Li; single particle) were crushed, and the crushed scraps were heat-treated at 550 °C for 30 minutes in air to remove a binder and a conductive material and separate a current collector and a cathode active material. Through these processes, the cathode active material was recovered. At this time, temperature was increased to the heat treatment temperature at a temperature increase rate of 5 °C/min, and air was supplied at a rate of 3 L/min.

The recovered cathode active material was confirmed to be single particles through SEM image.

Li₂CO₃ as a lithium precursor was immediately added to the recovered cathode active material without washing, and annealing was performed at 750 °C for 10 hours in air. At this time, air was supplied at 3 L/min. At this time, when the total lithium contained in a cathode active material in a raw material is 100 mol%, the lithium precursor was added in an amount capable of providing 10 mol% of lithium.

The annealed cathode active material and distilled water was mixed in a weight ratio of 1:1 and stirred at 300 rpm for 5 minutes. Then, reduced pressure filtration was performed to obtain solids. The solids was subjected to vacuum drying at 130 °C for 12 hours to obtain a washed cathode active material.

The washed cathode active material was coated with boric acid and heated at 300 °C for 5 hours to obtain a final recycled cathode active material. At this time, boric acid was added in an amount of 1000 ppm based on the total weight of the cathode active material, the temperature increase rate was 2 °C/min until the heat treatment temperature was reached, and air was supplied at 3 L/min.

Here, the molar ratio of lithium to other metals in the cathode active material was measured using an ICP analyzer. At this time, general ICP analysis devices widely used in laboratories may be used, but there is no deviation according to the measuring device or method.

In the present disclosure, ppm is based on weight unless otherwise specified.

### Example 2

A recycled cathode active material was prepared in the same manner as in Example 1 except that, instead of an NCM-based lithium composite transition metal oxide (based on 100 mol% in total of other metals other than Li, 61 mol% of Ni being included, single particles) in cathode scraps discarded after punching out a cathode plate, an NCM-based lithium composite transition metal oxide (based on 100 mol% in total of other metals other than Li, 81 mol% or more of Ni being included) was used. In addition, the recovered cathode active material was confirmed to be single particles through an SEM image.

### Comparative Example 1

A recycled cathode active material was prepared in the same manner as in Example 1 except that, in the annealing step, annealing was performed at 750 °C for 5 hours.

### Comparative Example 2

A recycled cathode active material was prepared in the same manner as in Example 1 except that, in the annealing step, annealing was performed at 750 °C for 15 hours.

### Comparative Example 3

A recycled cathode active material was prepared in the same manner as in Example 1 except that, instead of an NCM-based lithium composite transition metal oxide (based on 100 mol% in total of other metals other than Li, 61 mol% of Ni being included, single particles) in cathode scraps discarded after punching out a cathode plate, an NCM-based lithium composite transition metal oxide (based on 100 mol% in total of other metals other than Li, 61 mol% of Ni being included, secondary particles) was used. In addition, the recovered cathode active material was confirmed to be secondary particles through an SEM image.

### Comparative Example 4

A recycled cathode active material was prepared in the same manner as in Example 1 except that, instead of an NCM-based lithium composite transition metal oxide (based on 100 mol% in total of other metals other than Li, 61 mol% of Ni being included, single particles) in cathode scraps discarded after punching out a cathode plate, an NCM-based lithium composite transition metal oxide (based on 100 mol% in total of other metals other than Li, 81 mol% of Ni being included, secondary particles) was used. The recovered cathode active material was confirmed to be secondary particles through an SEM image.

### Reference Example

Instead of a reusable active material, a fresh NCM-based lithium composite transition metal oxide (based on 100 mol% in total of other metals other than Li, 61 mol% of Ni being included, average particle diameter: 3.99 µm) was prepared. The fresh cathode active material was confirmed to be single particles through an SEM image.

### [Test Example I: Particle diameter analysis and residual lithium content]

The content of residual lithium in the recycled or fresh cathode active material prepared in Examples 1 and 2, Comparative Examples 1 to 4, and Reference Example was measured as follows, and the results are shown in Table 1 below.

* Particle diameter analysis: According to the laser diffraction method, cathode active material particles were dispersed in a dispersion medium, the dispersed particles were placed in a laser diffraction particle size measuring device (Microtrac MT 3000), and the particles were irradiated with an ultrasonic wave of about 28 kHz with an output of 60 W. Then, the particle sizes corresponding to 5% (D₅), 50% (D₅₀), and 95% (D₉₅) of the volume accumulation in the measuring device, the minimum particle size (Dmix), and the maximum particle size (Dmax) were measured. Here, the particle diameter corresponding to 50% of the volume accumulation is referred to as the average particle diameter (D₅₀).

* Residual lithium content: The amount of residual Li was measured using a pH titrator T5 (Mettler toledo Co.). Specifically, 5 g of the cathode active material was dispersed in 100 ml of distilled water and mixed at 300 rpm for 5 minutes, and then filtering was performed to filter out an active material and obtain a filtrate. Change in pH values was measured while titrating the filtrate with a 0.1 M HCl solution. Based on the measurement result, a pH titration curve was obtained. Using the pH titration curve, the amounts of residual LiOH and Li₂CO₃ in the cathode active material were calculated.

**[Table 1]**

| Classification | Example 1 | Example 2 | Comparative Example 1 | Comparative Example 2 | Comparative Example 3 | Comparative Example 4 | Reference Example | |
|---|---|---|---|---|---|---|---|---|
| Particle diameter | D5 (µm ) | 1.98 | 2.12 | 1.88 | 1.90 | 5.69 | 6.76 | 2.19 |
| | D50 (µm ) | 3.85 | 3.50 | 3.75 | 3.74 | 10.13 | 10.88 | 3.99 |
| | D95 (µm ) | 7.17 | 7.48 | 7.04 | 6.99 | 19.33 | 20.67 | 7.21 |
| Residual lithium (wt%) | LiO H | 0.09 | 0.17 | 0.17 | 0.44 | 0.17 | 1.83 | 0.15 |
| | Li₂C O₃ | 0.88 | 1.05 | 1.06 | 0.23 | 0.68 | 1.88 | 0.19 |
| | Sum | 0.97 | 1.22 | 1.23 | 0.67 | 0.85 | 3.71 | 0.34 |

As shown in Table 1, the recycled single-particle cathode active materials of Examples 1 and 2 according to the present invention exhibit D5, D50, and D95 slightly larger than those of the recycled single-particle cathode active materials of Comparative Examples 1 and 2. The D5, D50, and D95 of the recycled single-particle cathode active materials of Examples 1 and 2 are similar to those of the fresh cathode active material of Reference Example. In particular, it can be seen that Example 1 is more similar to Reference Example. In addition, D50 and D95 of the recycled single-particle cathode active material of Example 2 differ slightly from those of Reference Example, which is due to the difference in nickel contents.

In addition, Comparative Examples 3 and 4 are secondary particles and have much larger D5, D50, and D95 values compared to the recycled single-particle cathode active materials of Examples 1 and 2. Based on these results, it was predicted that Examples 1 and 2 would have better lifespan characteristics than Comparative Examples 3 and 4 due to less fine particles and therefore less side reactions.

In addition, as shown in Table 1, it can be seen that the LiOH residual amount of the recycled cathode active materials of Examples 1 and 2 according to the present invention is similar to the LiOH residual amount of the fresh cathode active material of Reference Example. Based on these results, it can be expected that the recycled cathode active material of the present invention has similar or less battery performance degradation due to residual LiOH than the fresh cathode active material.

In addition, in Comparative Example 2, the amount of residual LiOH increased significantly due to excessive annealing.

### [Test Example II: SEM analysis]

The recycled or fresh cathode active material prepared in Examples 1 and 2, Comparative Examples 1 to 4, and Reference Example was photographed using an SEM device, and the images are shown in FIGS. 2 to 8, respectively. The SEM image was taken using a common SEM device commonly used in laboratories. Specifically, s-4200 (HITACHI Co.) was used. However, there is no deviation according to the measuring device or method.

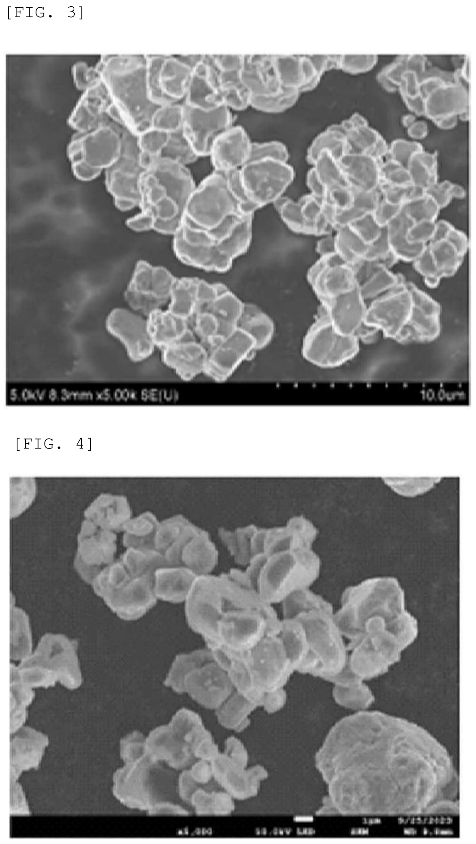

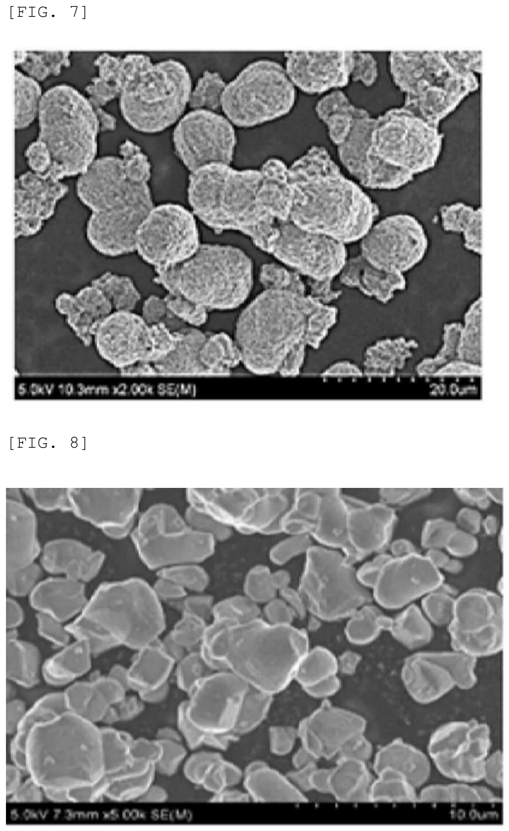

As shown in FIGS. 2 and 3 below, it can be seen that the recycled cathode active materials prepared in Examples 1 and 2 are single particles, broken into small particles, and dispersed, similar to the fresh cathode active material of Reference Example in FIG. 8.

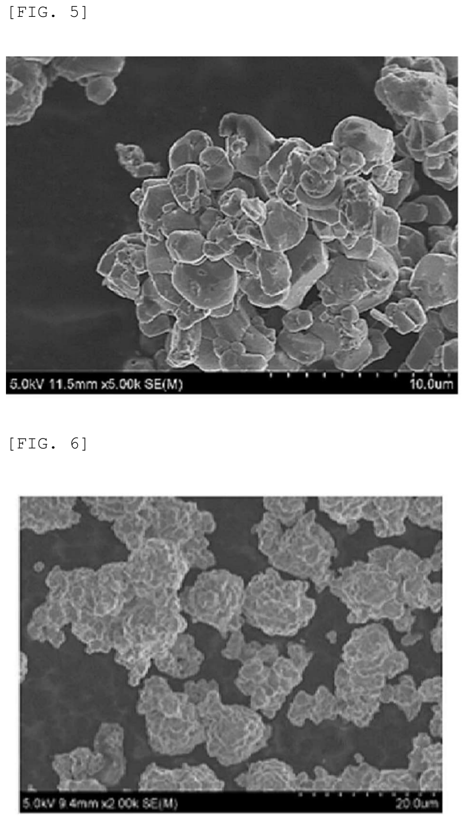

In addition, as shown in FIGS. 4 and 5 below, it can be confirmed that the recycled cathode active materials prepared in Comparative Examples 1 and 2 are single particles, not split into smaller particles, and clumped together.

On the other hand, as shown in FIGS. 6 and 7 below, it can be seen that the recycled cathode active materials prepared in Comparative Examples 3 and 4 are secondary particles, and are somewhat clumped together rather than split or dispersed as compared to the recycled cathode active material prepared in Example 1.

### [Test Example III: CHC cell evaluation]

The electrochemical performance of the recycled or fresh cathode active material prepared in Examples 1 and 2, Comparative Examples 1 to 3, and Reference Example was measured through CHC cell evaluation as follows, and the results are shown in Table 2 below.

* CHC cell evaluation: 97.5 % by weight of a recycled cathode active material, 1.15 % by weight of carbon black as a conductive material, and 1.35 % by weight of PVdF were prepared and mixed with NMP to obtain slurry. Then, aluminum foil was coated with the slurry to manufacture a cathode, and a cell (Coin Half Cell, CHC) was manufactured. Under the conditions of 3 ~ 4.25 V cut, initial formation charge and discharge 0.1C/0.1C, an electrolyte solution having a weight ratio of ethylene carbonate (EC):dimethyl carbonate (DMC):ethyl methyl carbonate (EMC) of 3:4:3, and other additives included, electrochemical performance (charge capacity, discharge capacity, and efficiency) was evaluated.

**[Table 2]**

| Classification | Initial charge capacity (CH) (mAh/g) | Initial discharge capacity (DCH) (mAh/g) | Efficiency (%) |
|---|---|---|---|
| Example 1 | 211.4 | 186.8 | 88.4 |
| Example 2 | 222.4 | 201.3 | 89.7 |
| Comparative Example 1 | 210 | 184.5 | 87.9 |
| Comparative Example 2 | 199.6 | 179.4 | 89.9 |
| Comparative Example 3 | 199.6 | 180.9 | 90.7 |
| Reference Example | 219.9 | 197.9 | 90 |

As shown in Table 2, the recycled single-particle cathode active materials of Examples 1 and 2 according to the present invention have better initial charge capacity (CH) and initial discharge capacity (DCH) than the recycled cathode active materials of Comparative Examples 1 to 3, and have initial charge capacity (CH) and initial discharge capacity (DCH) similar to those of the fresh cathode active material of Reference Example. In particular, it is confirmed that the initial discharge capacity, which is the most important characteristic in a secondary battery, is superior.

### [Test Example IV: XRD analysis]

The a-Axis lattice parameter, c-Axis lattice parameter, and crystallite size of the recycled or fresh cathode active material prepared in Examples 1 and 2, Comparative Examples 1 to 4, and Reference Example were measured by XRD analysis, and the results are shown in Table 3 below.

* Lattice parameter and crystallite size: Lattice parameter and crystallite size were measured by XRD analysis. Specifically, lattice parameters and crystallite size were measured by X-ray diffraction (XRD) analysis using Cu Kα X-rays. The lattice parameter was calculated by indexing the XRD measurement data through Rietveld refinement, and the crystallite size was calculated using the XRD measurement data using the Scherrer equation.

**[Table 3]**

| Classification | a-Axis lattice parameter (Å) | c-Axis lattice parameter (Å) | Crystallite size (nm) |
|---|---|---|---|
| Example 1 | 2.8780 | 14.248 | 150 |
| Example 2 | 2.8770 | 14.205 | 155 |
| Comparative Example 1 | 2.8786 | 14.252 | 144 |
| Comparative Example 2 | 2.8755 | 14.208 | 156 |
| Comparative Example 3 | 2.8680 | 14.230 | 110 |
| Comparative Example 4 | 2.8752 | 14.215 | 106 |
| Reference Example | 2.8776 | 14.250 | 160 |

As shown in Table 3, compared to the recycled cathode active materials of Comparative Examples 1 to 4, in the case of the recycled single-particle cathode active materials (Examples 1 and 2) according to the present invention, the a-Axis lattice parameter, c-Axis lattice parameter, and crystallite size of the crystal structure are more similar to the fresh cathode active material of Reference Example. These data indicate that battery characteristics are further improved.

### [Description of Symbols]

10: CURRENT COLLECTOR
20: ACTIVE MATERIAL LAYER
30: CATHODE SHEET
40: CATHODE PLATE
50: CATHODE SCRAP

## Claims

1. A method of recycling a cathode active material, comprising:
(a) heat treating a waste cathode in which a cathode active material layer comprising a single-particle cathode active material is formed on a current collector to thermally decompose a binder and a conductive material in the active material layer, separate the current collector from the cathode active material layer, and recover a cathode active material comprising single particles in the cathode active material layer;
(b) adding a lithium precursor to the recovered cathode active material and performing annealing at 400 to 1000 °C for 8 to 12 hours; and
(c) washing the annealed cathode active material with a washing solution.

2. A method of recycling a single-particle mid-nickel cathode active material, comprising:
(a) heat treating a waste cathode in which a cathode active material layer comprising a single-particle mid-nickel cathode active material is formed on a current collector to thermally decompose a binder and a conductive material in the active material layer, separate the current collector from the cathode active material layer, and recover the single-particle mid-nickel cathode active material in the active material layer;
(b) adding a lithium precursor to the recovered cathode active material and performing annealing at 400 to 1000 °C for 8 to 12 hours; and
(c) washing the annealed cathode active material with a washing solution.

3. The method according to claim 1 or 2, wherein the cathode active material layer comprises one or more selected from the group consisting of a nickel·cobalt·manganese (NCM) -based cathode active material, a nickel·cobalt·aluminum (NCA) -based cathode active material, and a nickel·cobalt·manganese·aluminum (NCMA) -based cathode active material, and comprises Ni in an amount of 40 mol% or more based on 100 mol% in total of other metals other than Li.

4. The method according to claim 1 or 2, wherein the heat treatment in step (a) is performed at 300 to 650 °C.

5. The method according to claim 1 or 2, wherein, the recovered cathode active material in step (a) is subjected to annealing without washing.

6. The method according to claim 1 or 2, wherein, in step (b), the lithium precursor is added at least in an amount corresponding to a reduced amount of lithium based on a molar ratio of lithium in the cathode active material of step (a) based on an amount of lithium in the recovered cathode active material.

7. The method according to claim 1 or 2, wherein the lithium precursor comprises one or more of LiOH, Li₂CO₃, LiNO₃, and Li₂O.

8. The method according to claim 1 or 2, wherein the washing of step (c) comprises mixing the annealed cathode active material and the washing solution, performing filtration, and then drying the solid cathode active material obtained after filtration.

9. The method according to claim 1 or 2, wherein the washing solution is water or a basic aqueous lithium compound solution.

10. The method according to claim 1 or 2, wherein the method of recycling a cathode active material comprises surface-coating the washed cathode active material to obtain a reusable cathode active material.

11. The method according to claim 10, wherein the surface coating is performed by coating a surface with one or more of a metal, an organic metal, and a carbon component in solid or liquid form and performing heat treatment at 100 to 1200 °C.

12. The method according to claim 1, wherein a cathode active material recycled according to the method of recycling a cathode active material has a D5 value of 1.95 µm or more or a D95 value of 7.11 µm or more on a particle size distribution (PSD).

13. A cathode active material comprising one or more selected from the group consisting of lithium nickel oxide (LNO)-based cathode active materials, nickel·cobalt·manganese (NCM)-based cathode active materials, nickel·cobalt·aluminum (NCA)-based cathode active materials, and nickel·cobalt·manganese·aluminum (NCMA)-based cathode active materials,
wherein the cathode active material comprises single particles, and/or has an a-Axis lattice parameter of 2.8763 to 2.8783 Å, a c-Axis lattice parameter of 14.200 to 14.250 Å, and a crystallite size of 148 nm or more as measured by XRD analysis, and/or has a D5 value of 1.95 µm or more or a D95 value of 7.11 µm or more on a particle size distribution (PSD).

14. The cathode active material according to claim 13, wherein the cathode active material has a D50 value of 3.45 to 3.91 µm on a particle size distribution (PSD).

15. The cathode active material according to claim 13, wherein the cathode active material comprises 1.09 % by weight or less in total of LiOH and Li₂CO₃.

16. The cathode active material according to claim 13, wherein, based on 100 mol% in total of other metals other than Li, the cathode active material comprises Ni in an amount of greater than 70 mol%.

17. The cathode active material according to claim 13, wherein a surface of the cathode active material is coated with a coating agent containing a metal or carbon.
